# EUROPEAN PATENT APPLICATION

(11) **EP 4 265 446 A1**
(43) Date of publication of application: **25.10.2023**
(21) Application number: 22169234.6
(22) Date of filing: 21.04.2022
(51) Int. Cl.: B60G 17/052, B60T 17/00, F15B 1/00

(54) **AIR PROCESSING UNIT, ELECTRONICALLY CONTROLLED AIR-SUSPENSION SYSTEM AND COMMERCIAL VEHICLE**

(71) Applicant: ZF CV Systems Europe BV, 1170 Brüssel (BE)
(72) Inventor: SEMENIUK, Maciej, 50-330 Wroclaw (PL)
(74) Representative: Copi, Joachim

(57) **Abstract**

The invention is directed to an air processing unit (100) for providing dried compressed air (108) to air-suspension units (35) of an electronically controlled air-suspension system. It comprises a housing (101) that includes an inlet (1) for receiving comprised air (102), air suspension ports (29.1, 29.2, 29.3) for providing dried compressed air (108) and that is arranged and configured to accommodate an air-drying unit configured to receive the compressed air and to provide dried compressed air (108) to a main supply line (115) and an air-suspension-system valve unit (138) comprising pneumatically controlled valves (137) configured to control a pneumatic connection between the main supply line (115) and the air-suspension ports and further comprising electrically controlled valves (139) configured to control a pneumatic connection between the main supply line (115) and the control ports (137.1) of the pneumatically controlled valves (137) in dependence on an electric suspension-control signal (SS).

## Description

The invention is directed to an air processing unit for providing compressed air to air-suspension units of an electronically controlled air suspension system, to an electronically controlled air-suspension system and to a commercial vehicle.

In the ongoing transition from traditional internal-combustion-engine (ICE) truck to electric vehicles (EV), there is a trend for simplification of the existing pneumatic systems.

US 2019/0316610 A1 describes an air processing unit for a pneumatic system. The unit includes a compressor inlet for receiving compressed air in a supply mode. The unit further includes a consumption outlet for connecting at least one consumption circuit, such as pneumatic brake circuits, suspension circuits and other pneumatic consumers. The unit further includes an air drying unit connected to the compressor inlet for drying and filtering the compressed air and delivering dried compressed air at its outlet. The unit further includes a supply line extending from the outlet to the consumption outlet.

Currently, air processing units (APU) dry and filter compressed air provided by a compressed air supply unit, such as a compressor, and provide said dried and filtered compressed air to the pneumatic units such as braking unit or air-suspension units, whose operation is controlled by valves. The connection between the output port of the APU and the valves controlling the operation of the pneumatic units is typically provided by pipes or tubes extending therebetween.

It would be beneficial to simplify electronically controlled air-suspension systems and increase their reliability, in particular in electric vehicles.

A first aspect of the present invention is formed by an air processing unit for providing compressed air to air-suspension units of an electronically controlled air suspension system. The air processing unit comprising a housing that includes an inlet for receiving comprised air from a comprised-air supply unit, and plurality of air suspension ports for providing compressed air to the air-suspension units.

The housing is arranged and configured to accommodate an air-drying unit that has an input port connected to the inlet for receiving the compressed air, an air drying chamber connected to the input port and configured to dry the compressed air received, and an outlet port connected to the air drying chamber and configured to provide dried compressed air to a main supply line. The housing also accommodates an electronically controlled valve unit that is configured to control a pneumatic connection between the main supply line and the control port unit in dependence on an electrical control signal.

According to the invention, the housing further accommodates an air-suspension-system valve unit that comprises a plurality of pneumatically controlled valves that are arranged and configured to control a pneumatic connection between the main supply line and the air-suspension ports in dependence on respective pressure control signals at respective control ports of the pneumatically controlled valves. The air-suspension-system valve unit further comprises a plurality of electrically controlled valves configured to control a pneumatic connection between the main supply line and the control ports of the pneumatically controlled valves in dependence on an electric suspension-control signal.

Thus, the air-processing unit of the first aspect of the invention offers an efficient and cost-effective solution for electronically controlled air-suspension systems, in particular for electric vehicles. The electrically controlled valves necessary for operating the air-suspension units are integrated into the same housing and as the air drying unit. The electrically controlled valves of the air-suspension-system valve unit are all provided with operating air from the same channel, namely the main supply line which increases the reliability of the control process of the provision of compressed air to the air-suspension units via the air suspension ports

In the following, developments of the air-processing unit of the first aspect of the invention will be described.

In a preferred development of the air-processing unit of the first aspect of the present invention, the housing further includes an exhaust port for exhausting compressed air out of the housing, for instance to the environment. In this particular development, the housing is further configured to accommodate an exhaust-valve unit configured to control a pneumatic connection from the inlet to the exhaust port in dependence on an exhaust control pressure value at a control port unit of the exhaust-valve unit. The housing also accommodates an electronically controlled exhaust-control valve unit configured to control a pneumatic connection between the main supply line and the control port unit in dependence on an electrical exhaust control signal. These technical features enable the implementation of a regeneration phase of the air dryer, in which dried compressed air flows from the outlet port to the input port of the air dryer in order to regenerate the desiccant material, and then flows to the environment via the exhaust port. The regeneration phase is controlled by the exhaust-valve unit, which is typically a pneumatically-controlled dual control valve, wherein a first pressure control input is fluidly connected to the input port of the air drying unit and a second pressure control input is fluidly connected to an outlet port of the electronically controlled exhaust-control valve, which is driven by the electrical exhaust-control signal. Thus, when the pressure value at both the first and the second pressure control inputs of the control port unit are above a predetermined pressure threshold value, which can be the same, or different for both pressure control inputs of the control port unit, the exhaust valve unit operates in a state in which the pressurized air exits the air-processing unit via the exhaust port.

Preferably, the electronically controlled exhaust control valve unit comprises a 3/2-way solenoid valve, that actuates against a spring element F to transit from a ground state where the main supply line is not connected to the control port unit to an actuated state in which the main supply line is connected to the control port unit.

In another development, the housing alternatively or additionally comprises a governor port for providing a governor control pressure signal for controlling operation of a governor of the compressed-air supply unit. This is advantageous in the case of using a pneumatically controlled compressor rather than an electrically controlled compressor. In this development, the housing further accommodates a governor control valve configured to control a pneumatic connection between the main supply line and the governor port in dependence of a governor control electrical signal.

Preferably, the governor control valve is a 3/2-way solenoid valve, that actuates against a spring element F to transit from a ground state where the main supply line is not connected to the governor port to an actuated state in which the main supply line is connected to the governor port.

In a preferred development, the plurality of electronically controlled valves of the air-suspension-system valve unit, and, optionally, the electronically controlled valve unit and/or the governor control valve, are provided in a single valve block within the housing. The single valve block thus preferably includes all the electrically controlled valves of the air-processing unit.

More preferably, the housing further includes an electrical interface unit, preferably a single electrical interface unit, for connecting the electronically controlled valves of the air-processing unit to an external electronic control unit that is configured to provide the respective electric control signals for controlling operation of the electronically controlled valves, and optionally, the electronically controlled valve unit and/or the governor control valve.

In another development, the plurality of pneumatically controlled valves of the air-suspension-system valve unit comprises a pneumatic 3/2-way valve, a first pneumatic 2/2-way valve and a second pneumatic 2/2-way valve. A first port of the pneumatic 3/2-way valve is connected to the main supply line, a second port of the pneumatic 3/2-way valve is connected to the exhaust port and a third port of the pneumatic 3/2-way valve is connected to a first air-suspension port. In a ground operational state, the second port is connected to the third port and in an actuated operational state the first port is connected to the third port. Regarding the first pneumatic 2/2-way valve, a first port thereof is connected to the third port of the pneumatic 3/2-way, and a second port thereof is connected to a second air-suspension port. In a ground operational state, the first and second ports are disconnected and in an actuated operational state the first port is connected to the second port. Regarding the second pneumatic 2/2-way valve, a first port thereof is connected to the third port of the pneumatic 3/2-way, and a second port of the second pneumatic 2/2-way valve is connected to a third air-suspension port. In a ground operational state the first and second ports of the second 2/2-way valve are disconnected and in an actuated operational state the first port is connected to the second port. In this development, each of the pneumatic 3/2-way valve, the first pneumatic 2/2-way valve and the second pneumatic 2/2-way valve are controlled by a respective one of the electrically controlled valves.

This development is particularly advantageous for so called 4x2/2c systems, also referred to as 2-channel valve systems where the air-suspension ports can be controlled independently. This is also referred to as "rear-axle valve" because it is particularly useful for a 2-channer rear axle. However, in principle it is not fixed where a user may implement this air-processing unit.

Alternatively, and in particular for so-called 4×2/1c systems, also referred to as 1-channel valve systems, where two air-suspension ports are operated simultaneously and thus the valve structure can be simplified, a development of the air-processing unit is such that the plurality of pneumatically controlled valves of the air-suspension-system valve unit comprises a pneumatic 3/2-way valve, a first pneumatic 2/2-way valve and a second pneumatic 2/2-way valve. As described above, a first port of the pneumatic 3/2-way valve is connected to the main supply line, a second port of the pneumatic 3/2-way valve is connected to the exhaust port and a third port of the pneumatic 3/2-way valve is connected to a first air-suspension port, and wherein in a ground operational state the second port is connected to the third port and in an actuated operational state the first port is connected to the third port. Regarding the first pneumatic 2/2-way valve, a first port of the first pneumatic 2/2-way valve is connected to the third port of the pneumatic 3/2-way, and a second port of the first pneumatic 2/2-way valve is connected to a second air-suspension port, and wherein in a ground operational state the first and second ports are disconnected and in an actuated operational state the first port is connected to the second port. Further, regarding the second pneumatic 2/2-way valve, a first port of the second pneumatic 2/2-way valve is connected to the third port of the pneumatic 3/2-way, and a second port of the second pneumatic 2/2-way valve is connected to a third air-suspension port, and wherein in a ground operational state the first and second ports are disconnected and in an actuated operational state the first port is connected to the second port. In this particular development, the second air-suspension port and the third air-suspension port are preferably connected via a throttle valve. Further, the pneumatic 3/2-way valve, is controlled by a first electrically controlled valve and the first pneumatic 2/2-way valve and the second pneumatic 2/2-way valve are controlled by a second electrically controlled valve. Thus, the mechanical hardware is similar but one solenoid coil is missing, which helps to reduce the costs of the solenoid block. A main usage for this development is for front-axle applications, where typically there is just one height sensor. However, used for real-axle applications are also possible.

In another development the housing may include one or more additional output ports for other pneumatic systems, such as a braking system or other additional pneumatic consumers. The housing is thus advantageously configured to accommodate the necessary valves for supplying the compressed air to the pneumatic systems. In particular, the housing is arranged and configured to accommodate a multi-circuit protection valve unit.

In a development, the air processing unit comprises a housing that further includes one or more additional output ports that are connected to the main supply line and configured to provide dried compressed to external pneumatic units.

In another development, the air processing unit further comprises a multi circuit protection valve arrangement that is pneumatically arranged between the main supply line and one or more air-suspension port and/or the additional output ports, and wherein the housing further accommodates the multi circuit protection valve arrangement.

According to a second aspect of the present invention, an electronically controlled air-suspension (ECAS) system is described. The ECAS system includes a compressed-air supply unit, in particular a compressor, for generating and supplying compressed air to an air-processing unit in accordance with the first aspect of the invention. The ECAS system also comprises an electronic control unit for providing the electrical control signals for controlling operation of the electronically controlled valves of the air-suspension-system valve unit, and, when applicable, also to the electronically controlled valve unit and/or the governor control valve. The ECAS system also comprises air-suspension units, in particular air-bellows, pneumatically connected to the air-suspension ports.

Thus, the ECAS system of the second aspect of the invention shares the advantages of the air-processing unit of the first aspect or of any of its developments.

A third aspect of the present invention is formed by a commercial vehicle that comprises an electronically controlled air-suspension system in accordance with the second aspect. Thus, the commercial vehicle of the third aspect of the invention also shares the advantages of the air-processing unit of the first aspect or of any of its developments.

It shall be understood that a preferred embodiment of the present invention can also be any combination of the dependent claims or above embodiments with the respective independent claim.

These and other aspects of the invention will be apparent from and elucidated with reference to the embodiments described hereinafter.

The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regards to additions to the lessons immediately recognizable from the drawings, reference is made to the relevant state of the art. It should be borne in mind that numerous modifications and changes can be made to the form and detail of an embodiment without deviating from the general idea of the invention. The features of the invention disclosed in the description, in the drawings and in the claims may be essential for the further development of the invention, either individually or in any combination.

In addition, all combinations of at least two of the features disclosed in the description, drawings and/or claims fall within the scope of the invention. The general idea of the invention is not limited to the exact form or detail of the preferred embodiment shown and described below or to an object which would be limited in comparison to the object claimed in the claims. For specified design ranges, values within the specified limits are also disclosed as limit values and thus arbitrarily applicable and claimable.

The following drawings show in:
- Fig. 1: a schematic block diagram of a comparative example of an air suspension system including an air-processing unit configured to provide a control pressure signal to a governor for pneumatically controlling operation of an air compressor for providing compressed air to air-suspension units;
- Fig. 2: a schematic block diagram of a first embodiment of an air processing unit according to the invention;
- Fig. 3: a schematic block diagram of a second embodiment of an air processing unit according to the invention;
- Fig. 4: a schematic pressure diagram of a third embodiment of an air processing unit according to the invention;
- Fig. 5: a schematic pressure diagram of a fourth embodiment of an air processing unit according to the invention;
- Fig. 6: a schematic pressure diagram of a fifth embodiment of an air processing unit according to the invention;
- Fig. 7: a schematic pressure diagram of a sixth embodiment of an air processing unit according to the invention;
- Fig. 8: a schematic pressure diagram of a seventh embodiment of an air processing unit according to the invention;
- Fig. 9: a schematic block diagram of a commercial vehicle according to the invention.

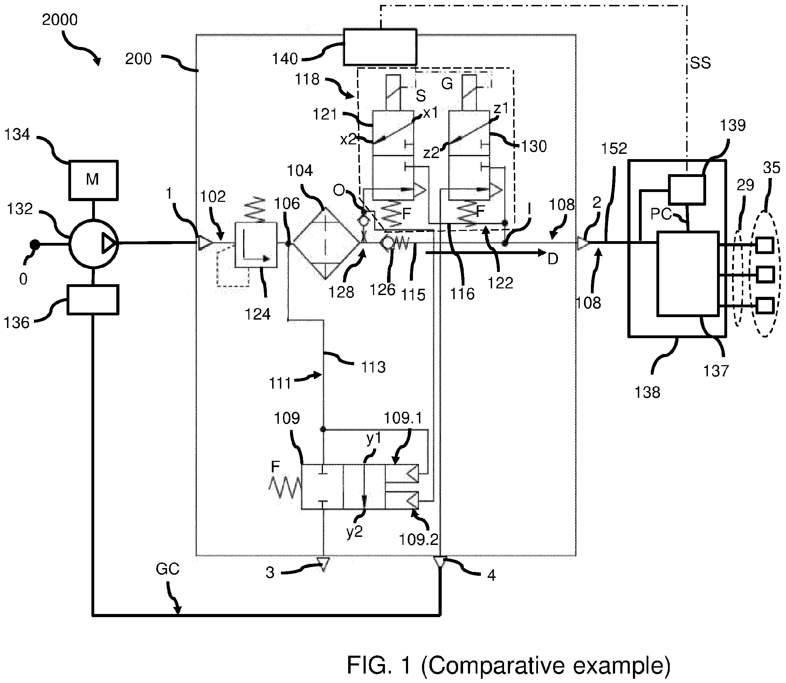

Figures 1, 4, 5, 6, 7 and 8 include pneumatic diagrams that comprise drawings and functional symbols known to the person skilled in the art. The drawing symbols and functional symbols are to be interpreted in accordance with the standard DIN 74253 and/or DIN ISO 1219.

Fig. 1 shows a schematic block diagram of a comparative example of a non-integrated electronically controlled air-suspension system 2000 including an air processing unit 200 configured to provide a control pressure signal GP via a governor port 4 to a governor 136 for pneumatically controlling operation of an air compressor 132, in particular a pneumatically controllable air compressor, but that is also currently used in combination with electrically controllable air compressors. The air compressor 132 is operated by a motor 134 and is configured to take ambient air via an input port 0 of the compressor 132 and to provide compressed air 102 to an inlet port 1 of the air processing unit (APU) 200. The air processing unit comprises an air drying unit 104 arranged and configured, in so-called drying phase D, to dry the received compressed air 102 and to provide dried compressed air 108 to an internal main supply line 115 that connects the air drying unit to a supply port 2 of the air processing unit 200. The dried compressed air 108 is provided to via a dedicated connection pipe or hose 152 to an external an air-suspension-system valve unit 138 comprising a plurality of pneumatically controlled valves 137 arranged and configured to control a pneumatic connection between the supply port 2 and air-suspension ports 29, in dependence on respective pressure control signals PC. The air-suspension system-valve unit further comprises a plurality of electrically controlled valves 139 configured to control a pneumatic connection between the supply port 2 and control ports of the pneumatically controlled valves 137 in dependence on an electric suspension-control signal SS provided by the electronic control unit 140. This connection between the supply port 2 and the control ports provide the pressure control signals PC for providing compressed air to the air-suspension ports 29, which are connected to air-suspension units, for example, air bellows 35, of the suspension system 2000. The air drying unit 104 is also operable in a so-called regeneration phase, in which dried compressed air is provided from the supply port 2 via an exhaust control valve unit 118 that includes two electrically controlled solenoid valves 121 and 130. The exhaust control valve unit 118 has an input port I connected to the supply line proximate the supply port 2, and an output port O connected to the main supply line 115 proximate the air drying unit. This connection is preferably done via a check valve and/or a throttle unit 128. The exhaust control valve unit 118, acting as a return flow control unit, is thus advantageously arranged to bypass a check valve 126 in the supply line, which is arranged to stop a flow of return air from the supply port 2 to the air drying unit 104 via the supply line 115, and control a return flow of dried air 122 via a return line 116 by means of the solenoid valve 121. The solenoid valve 130 controls a pneumatic connection between the input port I and the governor port 4 for pneumatically controlling the governor 136. The electric signals S and G, which control operation of the solenoid valves 121 and 130 respectively, are provided, for instance, by an electronic control unit 140. Electric signal G controls solenoid valve 130, which is a 3/2-way solenoid valve with two states and 3 ports. Upon reception of the electric signal G, the solenoid valve 130 is energized and a pneumatic connection between the input port I and the governor port 4 is enabled by connecting the ports z1 and z2 of the solenoid valve 130. This provides a pneumatic governor control pressure signal GC to the governor 136. Provision of the electric signal S to the solenoid valve 121, which is also a 3/2-way solenoid valve, opens a pneumatic connection between the input port I and the output port O by connecting the ports x1 and x2 of the solenoid valve 121, which bridges the check valve 126 in the supply line 115 and enables a return flow of dried compressed air from the pneumatic unit 138 via the supply port 2 to the air drying unit during a regeneration phase. The output port O of the exhaust control valve unit 118 and the input port 106 of the air drying unit are connected to a pneumatically-controlled dual control valve 109, acting as a purge or exhaust valve, wherein a first pressure control input 109.1 is fluidly connected to the input port 106 of the air drying unit 104 and a second pressure control input 109.2 is fluidly connected to the outlet port O of the return flow control unit. When the pressure value at both the first and the second pressure control inputs 109.1 and 109.2 is above a respective predetermined value (identical or not), ports y1 and y2 of the controlled dual control valve 109 are connected and the exhaust or purge air 111 used in the regeneration phase to regenerate the desiccant material of the air drying unit 104 is exhausted via the exhaust line 113 to the exhaust port 3. The pneumatic system 2000 may also comprise a charging valve 124 arranged between the inlet port 1 and the input port 106 of the air drying unit 104.

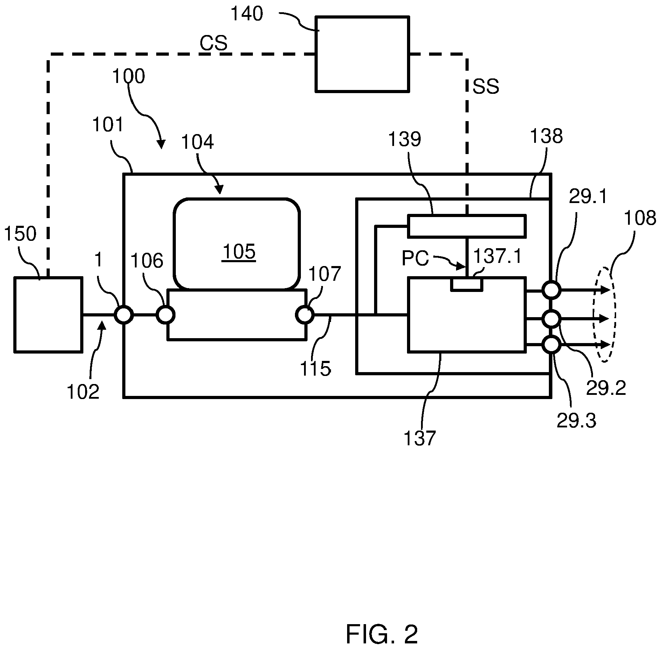

Fig. 2 shows a schematic block diagram of a first embodiment of an air-processing unit 100 according to the invention. The air processing unit 100 is suitable for providing dried compressed air 108 to air-suspension units (not shown) of an electronically controlled air-suspension system. The air processing unit 100 comprises a housing 101 that includes an inlet 1 or inlet port for receiving comprised air 102 from a comprised-air supply unit 150, in particular from a compressor. In the particular embodiment shown in Fig. 2, the compressor 150 is an electronically controlled compressor that is controlled by an electronic control unit 140 that provides electrical compressor control signals CS, preferably via a CAN bus. The housing also includes a plurality of air suspension ports 29.1, 29.2, 29.3 for providing dried compressed air 108 to the air-suspension units (35) of the pneumatic system, in particular to air bellows of an electronically controlled air-suspension system.

The housing 101 is arranged and configured to accommodate an air-drying unit 104 that has an input port 106 connected to the inlet 1 for receiving the compressed air 102, an air drying chamber 105 connected to the input port 106 and configured to dry the compressed air 102 received, and an outlet port 107 connected to the air drying chamber 105 and configured to provide dried compressed air 108 to a main supply line 115. The housing 101 further accommodates an air-suspension-system valve unit 138 that comprises a plurality of pneumatically controlled valves 137 arranged and configured to control a pneumatic connection between the main supply line 115 and the air-suspension ports 29.1, 29.2, 29.3 in dependence on respective pressure control signals PC at respective control ports 137.1 of the pneumatically controlled valves 137. The air-suspension-system valve unit further comprises a plurality of electrically controlled valves 139 configured to control a pneumatic connection between the main supply line 115 and the control ports 137.1 of the pneumatically controlled valves 137 in dependence on an electric suspension-control signal SS that is provided by the external electronic control unit 140, preferably via a CAN bus or via a dedicated communication link.

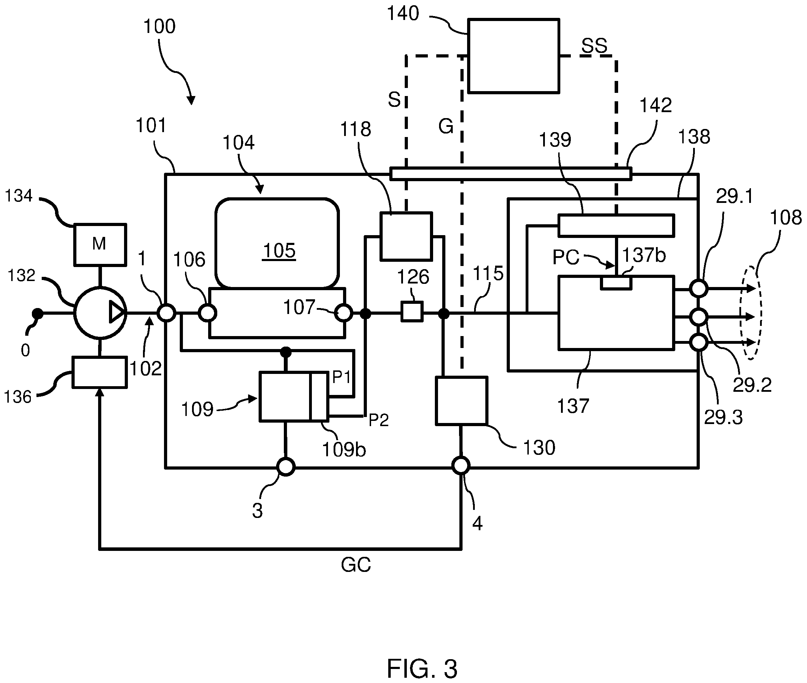

Fig. 3 shows a schematic block diagram of a second embodiment of an air-processing unit 100 according to the invention. The following discussion will focus on the differences between the air-processing unit of Fig. 3 and the air-processing unit of Fig. 3. Those technical features having an identical or similar function will be referred to using the same reference numbers. The air-processing unit 100 of Fig. 2 is particularly configured to be used in combination with a pneumatically controlled compressor 132 that is operated by a motor 134 for providing the compressed air 102 to the inlet 1. The compressor 132 includes a governor 136 that controls the operation of the compressor 132 in dependence of the reception of a pneumatic governor control pressure signal GC. Thus, the air-processing unit 100 of Fig. 3 comprises a housing 101 that includes a governor port 4 for providing the governor control pressure signal (GC) for controlling operation of the governor 136 of the compressed-air supply unit 132. The housing 101 further accommodates an electrically controlled governor control valve 130 configured to control a pneumatic connection between the main supply line 115 and the governor port 4 in dependence of a governor control electrical signal G, that is provided by the electronic control unit 140, preferably via a CAN bus or via a dedicated communication link.

Additionally, the housing 101 of the air-processing unit 100 of Fig. 3 further includes an exhaust port 3 for exhausting compressed air out of the housing 101, in particular in a regeneration phase of the air-drying unit 104. The housing 101 is further configured to accommodate an exhaust-valve unit 109 configured to control a pneumatic connection from the inlet 1 to the exhaust port 3 in dependence on an exhaust control pressure values P1, P2 at a control port unit 109b of the exhaust-valve unit 109. The housing 101 further accommodates an electronically controlled exhaust-control valve unit 118 that is configured to control a pneumatic connection between the main supply line 115 and the control port unit 109.b in dependence on an electrical exhaust control signal S, which is provided by the external electronic control unit 140, preferably via a CAN bus or via a dedicated communication link.

The air-processing unit 100 of Fig. 2 may be also include a housing with an exhaust port and accommodating an exhaust-valve unit and an electronically controlled exhaust-control valve unit as explained above, in order to be additionally operable in a regeneration phase.

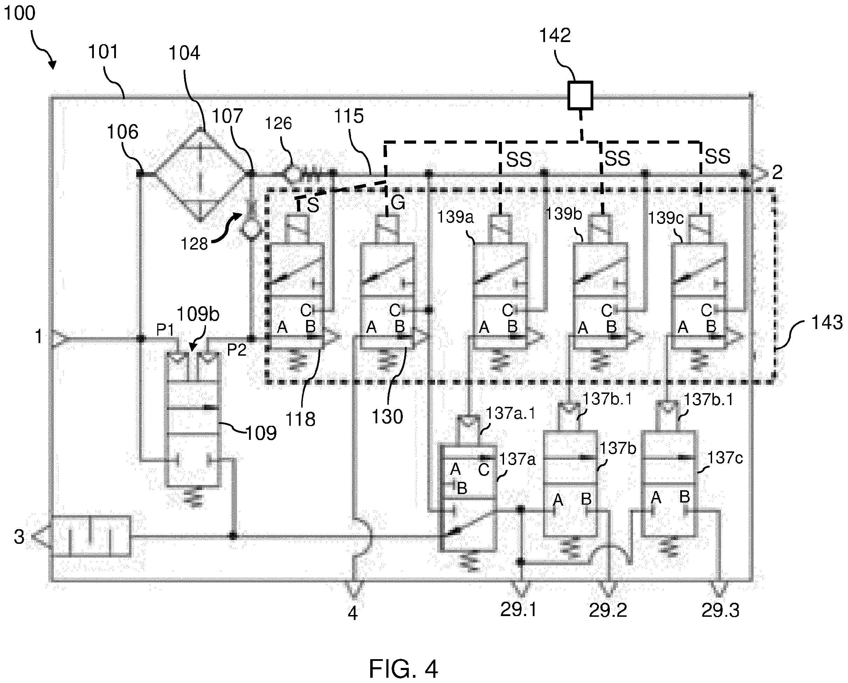

Fig. 4 shows a schematic pressure diagram of a third embodiment of an air-processing unit 100 according to the invention. The pressure diagram represents an air-processing unit for pneumatically controlling operation of an air compressor for a 4x2/2c ECAS system. The following discussion will focus on the differences between the air-processing unit of Fig. 2 and Fig .3 with respect to the air-processing unit of Fig. 4. Those technical features having an identical or similar function will be referred to using the same reference numbers. The housing 101 of the air-processing unit 100 of Fig. 4 includes an inlet 1 for connection to a compressed-air supply unit (not shown) which can be electrically or pneumatically controlled, an output port 2 directly connected to the main supply line 115, a plurality of air-suspension ports 29.1, 29.2 and 29.3 for connecting air-suspension units, such as air-bellows (not shown), an exhaust port 3 for exhausting compressed air, for example during a regeneration phase, and a governor port 4 for providing the governor control electrical signal G, in case the compressor is a pneumatically controlled compressor.

The housing 101 further includes an electrical interface unit 142 for connecting the electronically controlled valves 139a, 139b, 139c, the electronically controlled exhaust control valve unit 118 and the governor control valve 130 to an external electronic control unit (not shown) that is configured to provide the respective electric control signals SS, G and S for controlling operation of the electronically controlled valves 139a, 139c, 139,c, the electronically controlled exhaust control valve unit 118 and the governor control valve 130.

A pneumatically-controlled dual control valve 109, acts as a purge or exhaust valve, wherein a first pressure control input of the control port unit 109b is fluidly connected to the input port 106 of the air drying unit 104 and a second pressure control input of the control port unit 109b is fluidly connected to a first port 118A of the electronically controlled exhaust control valve unit 118 (indicated as port A of valve 118 in Fig. 4). When the pressure value at both the first and the second pressure control inputs 109b is above a respective predetermined value (identical or not), the ports of the controlled dual control valve 109 are connected and the exhaust or purge air used in the regeneration phase to regenerate the desiccant material of the air drying unit 104 is exhausted via the exhaust port 3.

Advantageously, the plurality of electronically controlled valves 139a, 139b, 139c of the air-suspension-system valve unit 138, the electronically controlled exhaust control valve unit 118 and the governor control valve 130, are provided in a single valve block 143 within the housing 101.

The plurality of pneumatically controlled valves of the air-suspension-system valve unit of the air-processing unit 100 of Fig. 4 comprises a pneumatic 3/2-way valve 137a, a first pneumatic 2/2-way valve 137b and a second pneumatic 2/2-way valve 137c. As shown in Fig. 4 wherein a first port 137aA of the pneumatic 3/2-way valve 137a (indicated in Fig.4 as port A of valve 137a for the sake of clarity) is connected to the main supply line 115, a second port 137aB of the pneumatic 3/2-way valve 137a (indicated in Fig.4 as port B of valve 137a) is connected to the exhaust port 3 and a third port 137aC of the pneumatic 3/2-way valve 137a (indicated in Fig.4 as port C of valve 137a) is connected to a first air-suspension port 29.1. Regarding the operational states of the 3/2-way valve 137a, in a ground operational state, the second port is 137aB of the pneumatic 3/2-way valve 137a is connected to the third port 137aC of the pneumatic 3/2-way valve 137a and in an actuated operational state the first port 137aA of the pneumatic 3/2-way valve 137a is connected to the third port 137aC of the pneumatic 3/2-way valve 137a.

Regarding the first pneumatic 2/2-way valve 137b, a first port 137bA of the first pneumatic 2/2-way valve 137b (indicated in Fig.4 as port A of valve 137b for the sake of clarity) is connected to the third port 137aC of the pneumatic 3/2-way valve 137a, and a second port 137bB of the first pneumatic 2/2-way valve 137b is connected to a second air-suspension port 29.2. In a ground operational state of the first pneumatic 2/2-way valve 137b, the first and second ports 137bA, 137bB of the first pneumatic 2/2-way valve 137b are disconnected from each other and in an actuated operational state, the first port 137bA of the first pneumatic 2/2-way valve 137b is connected to the second port 137bB of the first pneumatic 2/2-way valve 137b.

Regarding the second pneumatic 2/2-way valve 137c, a first port 137cA of the second pneumatic 2/2-way valve 137c is connected to the third port 137aC of the pneumatic 3/2-way137a and also to the first air-suspension port 29.1, and a second port 137cB of the second pneumatic 2/2-way valve 137c is connected to a third air-suspension port 29.3. In a ground operational state of the second pneumatic 2/2-way valve 137c. the first and second ports 137cA, 137cB of the second pneumatic 2/2-way valve 137c are disconnected from each other and in an actuated operational state, the first port 137cA of the second pneumatic 2/2-way valve 137c is connected to the second port 137cB of the second pneumatic 2/2-way valve 137c.

In the air-processing unit 100 of Fig. 4 each one of the pneumatic 3/2-way valve 137a, the first pneumatic 2/2-way valve 137b and the second pneumatic 2/2-way valve 137c is controlled by a respective one of the electrically controlled valves 139a, 139b 139c. The electrically controlled valves 139a, 139b 139c are 3/2-way solenoid valves having each a first port 139aA, 139bA and 139cA (indicated in the figures as port A of the valves 139a, 139b 139c respectively) connected to the respective control ports 137a.1, 137b.1, 137c.1 of the pneumatic 3/2-way valve 137a, the first pneumatic 2/2-way valve 137b and the second pneumatic 2/2-way valve 137c respectively. A second port 139aB, 139bB, 139cB (indicated as port B of the valves 139a, 139b 139c in the figures) of the electrically controlled valves 139a, 139b 139c is an exhaust port, and a third port 139aC, 139bC, 139cC (indicated in the figures as port C of the valves 139a, 139b 139c respectively) of the electrically controlled valves 139a, 139b 139c is connected to the main supply line 115. The electrically controlled valves 139a, 139b 139c are electrically controlled by means of a respective suspension-control signal SS provided by an external electronic control unit (not shown) and received via an electrical interface unit 142 arranged at the housing 101. In a ground operation state, the first A and the second port B of the respective electrically controlled valve 139a, 139b or 139c are connected. Upon reception of the respective suspension-control signal SS, the electrically controlled valves shift to an actuated operational state in which the third port C is connected to the first port, thus pneumatically connecting the main supply line 115 to the control port 137a.1, 137b.1, 137c.1 of the respective pneumatically controlled valve 137a, 137b, 137c.

The electrical exhaust control signal S is also received via the electrical interface unit 142 and is used to control operation of the electronically controlled exhaust-control valve unit 118, which is arranged as a 3/2-way solenoid valve with a first port A connected to the control port unit 109b of the exhaust-valve unit 109, and, via a check valve and/or a throttle unit 128 to the output port 107 of the air-drying unit 104, a second port B arranged as an exhaust port of the valve 118 and a third port C connected to the main supply line 115. Between the output port 107 of the air-drying unit 104 and the main supply line 115, a check valve 126 is arranged to stop a return flow directly via the main supply line 115. The controlled exhaust-control valve unit 118 is arranged to bridge that check valve 126 when operated under control of the electrical exhaust control signal S. In fact, in a ground state, the first port 118A of the exhaust-control valve unit 118 is connected to the second port 118B. In an actuated state, the third port 118C is connected to the first port 118A, which opens a return path bridging the check valve 126 and simultaneously provides one of the exhaust control pressure values P2 for controlling the operation of the exhaust valve unit 109.

The governor control electrical signal G is also received via the electrical interface unit 142 and is used to control operation of the governor control valve 130, which is configured to control a pneumatic connection between the main supply line 115 and the governor port 4 in dependence of the governor control electrical signal G. The governor control valve 130 is arranged as a 3/2-way solenoid valve with a first port 130A (indicated as port A of valve 130 in the figures) connected to the exhaust port 3, a second port 130B (indicated as port B of valve 130 in the figures) arranged as an exhaust port of the governor control valve 130 and a third port 130C (indicated as port C of valve 130 in the figures) connected to the main supply line 115. In a ground state, the first port 130A of the governor control valve 130 is connected to the second port 130B. In an actuated state, the third port 130C is connected to the first port 130A, thus connecting the main supply line 115 to the governor port 4 and enabling the provision of the pneumatic governor control pressure signal in dependence on the governor control electrical signal G.

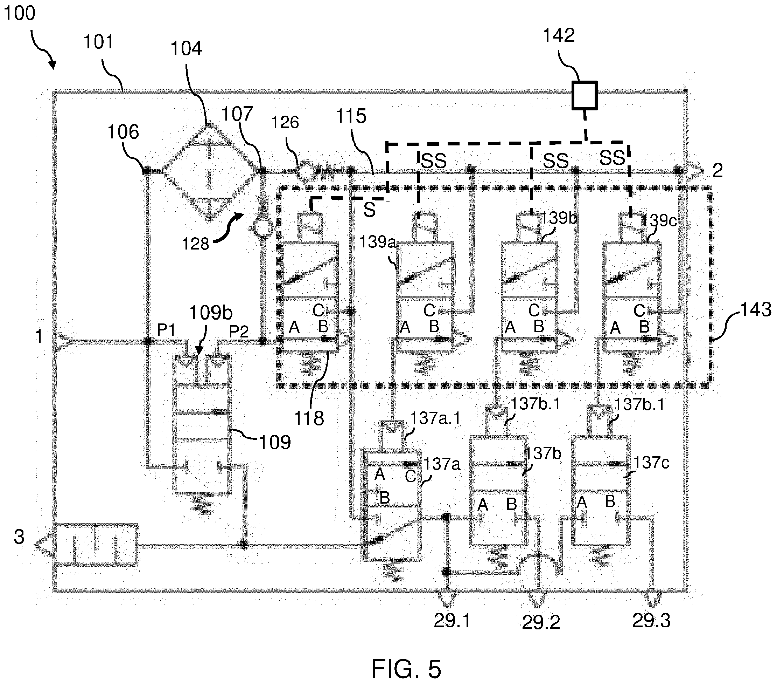

Fig. 5 shows a schematic pressure diagram of a fourth embodiment of an air-processing unit 100 according to the invention. The pressure diagram represents an air-processing unit for electrically controlling operation of an air compressor for a 4x2/2c ECAS system.

The difference between the air-processing unit shown in Fig. 4 and the air-processing unit 100 of Fig. 5 is that the air-processing unit 100 of Fig 5 does not include a governor port and the governor control valve, with reference numbers 4 and 130 respectively in Fig. 4. Thus, the air-processing unit 100 shown in Fig. 5 is particularly advantageous for use in combination with an electrically controlled compressor.

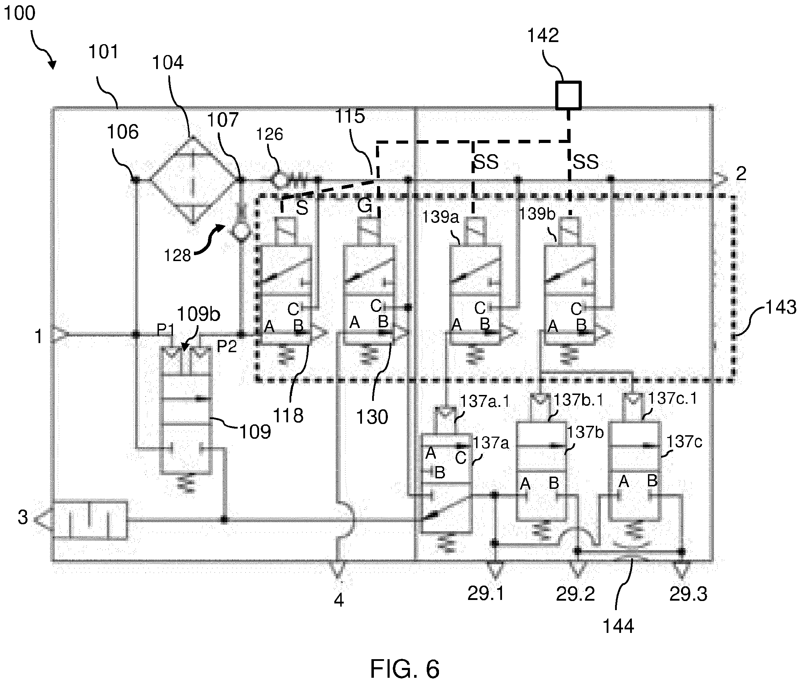

Fig. 6 shows a schematic pressure diagram of a fifth embodiment of an air-processing unit 100 according to the invention. The pressure diagram represents an air-processing unit for pneumatically controlling operation of an air compressor for a 4×2/1 c ECAS system. The following discussion will focus on the differences between the air-processing unit of Fig. 4 and the air-processing unit 100 of Fig. 6. Again, those technical features having identical or similar functions will be referred to using the same reference numbers. In the air-processing unit 100 of Fig. 6, the second air-suspension port 29.2 and the third air-suspension port 29.3 are connected via a throttle valve 144. Further, the pneumatic 3/2-way valve 137a, is controlled by a first electrically controlled valve 139a and the first pneumatic 2/2-way valve 137b and the second pneumatic 2/2-way valve 137c are controlled by a second electrically controlled valve 139b. Thus, two air-suspension ports, namely 29.2 and 29.3 are operated simultaneously. The mechanical hardware is similar, but one of the 3/2-way solenoid valves is missing, which reduces the production costs of this particular embodiment of an air-processing unit.

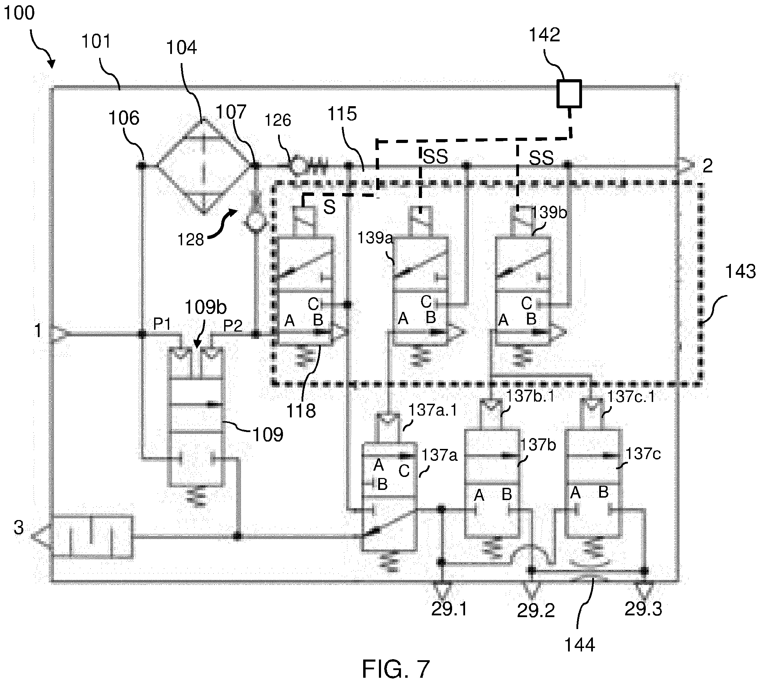

Fig. 7 shows a schematic pressure diagram of a sixth embodiment of an air-processing unit 100 according to the invention. The pressure diagram represents an air-processing unit for electrically controlling operation of an air compressor for a 4×2/1c ECAS system. The difference between the air processing unit of Fig. 6 and the air-processing unit 100 of Fig. 7 is that the air-processing unit 100 of Fig 7 does not include a governor port and the governor control valve, with reference numbers 4 and 130 respectively in Fig. 6. Thus, the air-processing unit 100 shown in Fig. 7 is particularly advantageous for use in combination with an electrically controlled compressor.

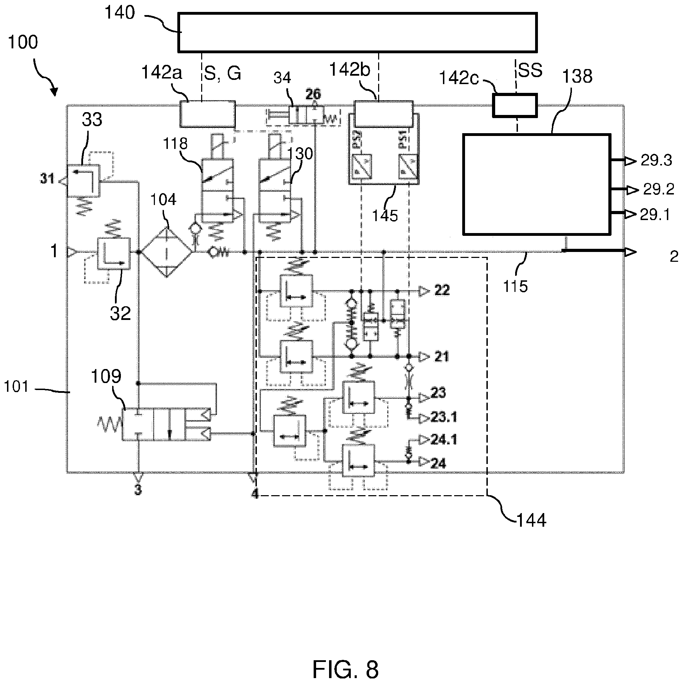

Additionally, any of the processing units 100 of Figs. 2, 3, 4, 5, 6 or 7 may comprise additional output ports, for example braking ports for connecting braking units. The valves used to control a provision of compressed air to the additional ports, for example a multi circuit protection valve arrangement, are also preferably accommodated in the housing 101. This is exemplarily shown in Fig. 8, which depicts a schematic pressure diagram of a seventh embodiment of an air-processing unit 100 according to the invention. The following discussion will focus on those technical features that distinguish the air processing unit 100 of Fig. 8 from those air processing unit of the previous figures.

The air processing unit 100 of Fig. 8 is for pneumatically controlling operation of an air compressor is a respective system. However, a system with an air processing unit for electrically controlling operation of an air compressor may also include any of the features that will be discussed in the following. The air-suspension-system valve unit 138 is depicted as a box, meaning that it can be implemented as a 4×2/1c or a 4×2/2c system as discussed above.

The air processing unit 100 of Fig. 8 is connected to an electronic control unit 140 via a plurality of electrical interface units 142a, 142b and 142c that are integrated in the housing 101, for instance as dedicated electrical connectors. The electrical interface unit 142a receives the electrical exhaust control signal S and the governor control electrical signal G and provides these signals to the exhaust control valve unit 118 and to the electrically controlled governor control valve 130. The electrical interface unit 142c receives the electrical suspension control signals SS and provides them to the air-suspension-system valve unit 138 for controlling provision of dried compressed air to the air suspension ports 29.1, 29.2 and 29.3.

In the air processing unit 100 of Fig. 8, the housing 101 further comprises additional output ports, such as port 2 configured as a general purpose port, port 26 for a manually activated inflation mode, and ports 21, 22, 23, 23.1, 24 and 24.1 that are connectable to braking units of a pneumatic braking system. These additional ports are connected to the main supply line 115, either directly or via a valve arrangement such as a manual 2/2-way valve 34 in the case of port 26 or via a multi circuit protection valve arrangement 144 in the case of the ports 21, 22, 23, 23.1, 24 and 24.1. These additional ports are also configured to provide dried compressed to external pneumatic units, including braking unit, inflation units, compressed air reservoirs, etc. Preferably, the multi circuit protection valve arrangement 144, i.e. the pneumatic units and the connection comprised by the multi circuit protection valve arrangement 144, is also accommodated in the housing 101. In the air processing unit 100 of Fig. 8, the multi circuit protection valve arrangement is operated in dependence on pressure values sensed by a pressure sensing unit 145, which is also connected to the electronic control unit 150 via an electrical interface unit 142b. Thus, the air-processing unit 100 of Fig. 8 is provided within a single housing 101 and is configured to directly provide dried compressed air to a plurality of pneumatic units of different pneumatic systems. Preferably, all electrically controlled valves 118, 130, 139 of the air-processing unit 100 of Fig. 1 are provided in a single valve block accommodated in the housing 101.

Any of the air processing units described in the previous figures may also comprise a charging valve 32, as shown for the air processing unit 100 of Fig. 8, that is arranged between the inlet port 1 and the air-drying unit 104. Also, another charging valve 33 is arranged between the air-drying unit 104 and a safety valve port 31.

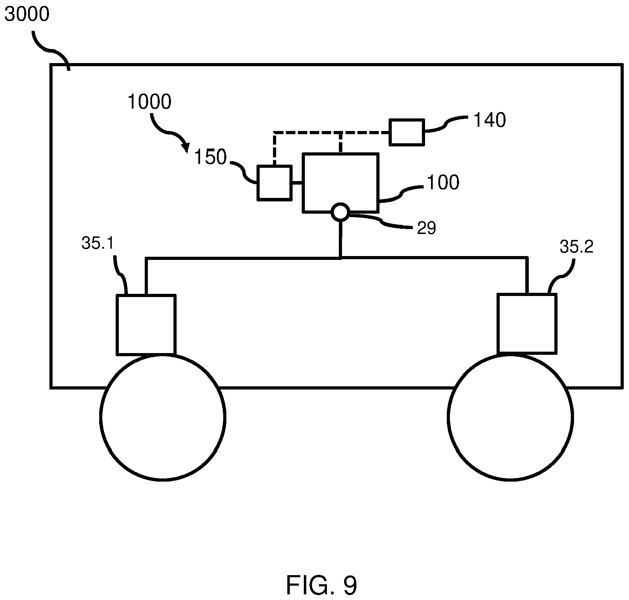

Fig. 9 shows a block diagram of an embodiment of a commercial vehicle 3000, for example a truck or a bus, which comprises an integrated electronically controlled air-suspension system 1000. The integrated electronically controlled air-suspension system 1000 comprises a compressed-air supply unit, for example, in this particular development, an electrically controlled compressor 150 that receive control signals from an electronic control unit 140. The compressor 150 is configured to generate and supply compressed air. The integrated electronically controlled air-suspension system 1000 also comprises an air-processing unit, for example any of the air-processing units 100 of Fig. 2, 3, 4, 5, 6 or 7. Alternatively (not shown), the compressor can be a pneumatically controlled compressor. In such an embodiment, it is preferred that the air-processing unit is in accordance with any of the Figs. 3, 4 or 6, namely that they include the features for providing the governor control pressure signal.

The electronic control unit 140, which is part of the integrated electronically controlled air-suspension system 1000 is further configured to provide the necessary electrical control signals SS, G, S for controlling operation of the electronically controlled valves of the air-suspension-system valve unit; and optionally, the electronically controlled exhaust control valve unit and/or the governor control valve 130.

The integrated electronically controlled air-suspension system 1000 also comprises air-suspension units, in particular air-bellows 35.1, 35.2, pneumatically connected to the air-suspension ports 29.

In summary, the invention is directed to an air processing unit for providing dried compressed air to air-suspension units of an electronically controlled air-suspension system. It comprises a housing that includes an inlet for receiving comprised air, air suspension ports for providing dried compressed air and that is arranged and configured to accommodate an air-drying unit configured to receive the compressed air and to provide dried compressed air to a main supply line and an air-suspension-system valve unit comprising pneumatically controlled valves configured to control a pneumatic connection between the main supply line and the air-suspension ports and further comprising electrically controlled valves configured to control a pneumatic connection between the main supply line and the control ports of the pneumatically controlled valves in dependence on an electric suspension-control signal.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

### LIST OF REFERENCE SIGNS (PART OF THE DESCRIPTION)

- 0: Input port
- 1: Inlet, inlet port of air processing unit
- 2: Outlet port of air processing unit
- 3: Exhaust port of air processing unit
- 4: Governor port of air processing unit
- 21: Additional outlet port
- 22: Additional outlet port
- 23, 23.1: Additional outlet ports
- 24, 24.1: Additional outlet port
- 26: Additional outlet port
- 29: Air-suspension port
- 29.1: First air-suspension port
- 29.2: Second air-suspension port
- 29.3: Third air-suspension port
- 31: Safety valve port
- 32: Charging valve
- 33: Charging valve
- 34: Manual 2/2-way valve
- 35: Air-suspension unit, e.g., air bellows
- 35.1: Air bellow
- 35.2: Air bellow
- 100: Air processing unit
- 101: Housing
- 102: Compressed air
- 104: Air-drying unit
- 105: Air-drying chamber
- 106: Input port of air-drying unit
- 107: Outlet port of air-drying unit
- 108: Dried compressed air
- 109: Exhaust-valve unit
- 109b: Port control unit
- 109.1: First control port of exhaust-valve unit
- 109.2: Second control port of exhaust-valve unit
- 111: Exhaust air, purge air
- 113: Exhaust line
- 115: Main supply line
- 116: Return line
- 118: Exhaust control valve unit
- 121: Electrically controlled solenoid valve
- 122: Return flow of dried air
- 124: Charging valve
- 126: Check valve
- 128: Check valve / Throttle unit
- 130: Electrically controlled governor control valve
- 132: Compressed air supply unit / pneumatically controlled compressor
- 134: Motor
- 136: Governor
- 137: Pneumatically controlled valves
- 137a: Pneumatic 3/2-way valve
- 137b: First pneumatic 2/2-way valve
- 137c: Second pneumatic 2/2-way valve
- 137.1: Control port of pneumatically controlled valve
- 137a.1: Control ports of pneumatically controlled valve 137a
- 137b.1: Control ports of pneumatically controlled valve 137b
- 137c.1: Control ports of pneumatically controlled valve 137c
- 138: Air-suspension-system valve unit
- 139: Electrically controlled valves
- 139a: First electrically controlled valve
- 139b: Second electrically controlled valve
- 139c: Third electrically controlled valve
- 140: Electronic control unit
- 142: Electrical interface unit
- 142a,b,c: Electrical interface units
- 143: Single valve block
- 144: Multi circuit protection valve arrangement
- 145: Pressure sensing unit
- 150: Compressed air supply unit / electrically controlled compressor
- 200: Comparative air processing unit
- 1000: Integrated electronically controlled air-suspension system
- 2000: Non-integrated electronically controlled air-suspension system
- 3000: Commercial vehicle
- A: Respective first port of valves 118, 130, 137a, b, c, 139a, b, c
- B: Respective second port of valves 118, 130, 137a, b, c, 139a, b, c
- C: Respective third port of valves 118, 130, 137a, 139a, b, c
- D: Drying phase
- F: Spring element
- G: Governor control electrical signal
- GC: Governor control pressure signal
- I: Input port of exhaust control valve unit
- M: Motor
- O: Output port of exhaust control valve unit
- PC: Pressure control signals
- P1: First exhaust control pressure value
- P2: Second exhaust control pressure value
- S: Electrical exhaust control signal
- SS: Electric suspension-control signal
- x1: First port of electrically controlled solenoid valve
- x2: Second port of electrically controlled solenoid valve
- x3: Third port of electrically controlled solenoid valve
- y1: First port of exhaust-valve unit
- y2: Second port of exhaust-valve unit
- z1: First port of governor control valve
- z2: Second port of governor control valve

## Claims

1. Air processing unit (100) for providing dried compressed air (108) to air-suspension units (35) of an integrated electronically controlled air-suspension system (1000), the air processing unit (100) comprising a housing (101) that includes:
- an inlet (1) for receiving comprised air (102) from a comprised-air supply unit (132, 150);
- a plurality of air suspension ports (29.1, 29.2, 29.3) for providing dried compressed air (108) to the air-suspension units (35); and
wherein the housing (101) is arranged and configured to accommodate:
- an air-drying unit (104) having an input port (106) connected to the inlet (1) for receiving the compressed air (102), an air drying chamber (105) connected to the input port (106) and configured to dry the compressed air (102) received, and an outlet port (107) connected to the air drying chamber (105) and configured to provide dried compressed air (108) to a main supply line (115);
**characterized in that** the housing (101) further accommodates:
an air-suspension-system valve unit (138) comprising a plurality of pneumatically controlled valves (137) arranged and configured to control a pneumatic connection between the main supply line (115) and the air-suspension ports (29.1, 29.2, 29.3) in dependence on respective pressure control signals (PC) at respective control ports (137a.1, 137b.1, 137c.1) of the pneumatically controlled valves (137), the air-suspension-system valve unit further comprising a plurality of electrically controlled valves (139, 139a, 139b 139c) configured to control a pneumatic connection between the main supply line (115) and the control ports (137.1) of the pneumatically controlled valves (137, 137a, 137b, 137c) in dependence on an electric suspension-control signal (SS).

2. The air-processing unit of claim 1, wherein the housing (101) further includes an exhaust port (3) for exhausting compressed air out of the housing (101), and wherein the housing (101) is further configured to accommodate an exhaust-valve unit (109) configured to control a pneumatic connection from the inlet (1) to the exhaust port (3) in dependence on an exhaust control pressure value (P1, P2) at a control port unit (109b) of the exhaust-valve unit (109), and an electronically controlled exhaust-control valve unit (118) configured to control a pneumatic connection between the main supply line (115) and the control port unit (109.2) in dependence on an electrical exhaust control signal (S);

3. The air-processing unit of claim 1 or 2, wherein the housing (101) comprises a governor port (4) for providing a governor control pressure signal (GC) for controlling operation of a governor (136) of the compressed-air supply unit (132), and wherein the housing (101) further accommodates a governor control valve (130) configured to control a pneumatic connection between the main supply line (115) and the governor port (4) in dependence of a governor control electrical signal (G).

4. The air-processing unit of any of the preceding claims, wherein the plurality of electronically controlled valves (139a, 139b, 139c) of the air-suspension-system valve unit (138), and, optionally, the electronically controlled exhaust control valve unit (118) and/or the governor control valve (130), are provided in a single valve block (143) within the housing (101).

5. The air-processing unit of any of the preceding claims, wherein the housing (101) further includes an electrical interface unit (142) for connecting the electronically controlled valves (139, 139a, 139b, 139c), and optionally, the electronically controlled exhaust control valve unit (118) and/or the governor control valve (130) to an external electronic control unit (140) that is configured to provide the respective electric control signals (SS, G S) for controlling operation of the electronically controlled valves (139, 139a, 139c, 139,c), and optionally, the electronically controlled exhaust control valve unit (118) and/or the governor control valve (130).

6. The air-processing unit of any of the preceding claims,
- wherein the plurality of pneumatically controlled valves (137a, 137b, 137c) of the air-suspension-system valve unit (138) comprises a pneumatic 3/2-way valve (137a), a first pneumatic 2/2-way valve (137b) and a second pneumatic 2/2-way valve (137c);
- wherein a first port (137aA) of the pneumatic 3/2-way valve (137a) is connected to the main supply line (115), a second port (137aB) of the pneumatic 3/2-way valve (137a) is connected to the exhaust port (3) and a third port (137aC) of the pneumatic 3/2-way valve is connected to a first air-suspension port (29.1), and wherein, in a ground operational state, the second port is (137aB) of the pneumatic 3/2-way valve (137a) is connected to the third port (137aC) of the pneumatic 3/2-way valve (137a) and in an actuated operational state the first port (137aA) of the pneumatic 3/2-way valve (137a) is connected to the third port (137aC) of the pneumatic 3/2-way valve (137a);
- wherein a first port (137bA) of the first pneumatic 2/2-way valve (137b) is connected to the third port (137aC) of the pneumatic 3/2-way valve (137a), and a second port (137bB) of the first pneumatic 2/2-way valve (137b) is connected to a second air-suspension port (29.2), and wherein in a ground operational state the first and second ports (137bA, 137bB) of the first pneumatic 2/2-way valve (137b) are disconnected and in an actuated operational state the first port (137bA) of the first pneumatic 2/2-way valve (137b) is connected to the second port (137bB) of the first pneumatic 2/2-way valve (137b); and
- wherein a first port (137cA) of the second pneumatic 2/2-way valve (137c) is connected to the third port (137aC) of the pneumatic 3/2-way(137a), and a second port (137cB) of the second pneumatic 2/2-way valve (137c) is connected to a third air-suspension port (29.3), and wherein in a ground operational state the first and second ports (137cA, 137cB) of the second pneumatic 2/2-way valve (137c) are disconnected and in an actuated operational state the first port (137cA) of the second pneumatic 2/2-way valve (137c) is connected to the second port (137cB) of the second pneumatic 2/2-way valve (137c); and wherein
- each one of the pneumatic 3/2-way valve (137a), the first pneumatic 2/2-way valve (137b) and the second pneumatic 2/2-way valve (137c) is controlled by a respective one of the electrically controlled valves (139a, 139b 139c).

7. The air-processing unit of any of the preceding claims 1 to 5,
- wherein the plurality of pneumatically controlled valves (137a, 137b, 137c) of the air-suspension-system valve (138) unit comprises a pneumatic 3/2-way valve (137a), a first pneumatic 2/2-way valve (137b) and a second pneumatic 2/2-way valve (137c);
- wherein a first port (137aA) of the pneumatic 3/2-way valve (137a) is connected to the main supply line (115), a second port (137aB) of the pneumatic 3/2-way valve (137a) is connected to the exhaust port (3) and a third port (137aC) of the pneumatic 3/2-way valve (137a) is connected to a first air-suspension port (29.1), and wherein, in a ground operational state, the second port (137aB) of the pneumatic 3/2-way valve (137a) is connected to the third port (137aC) of the pneumatic 3/2-way valve (137a) and in an actuated operational state the first port (137aA) of the pneumatic 3/2-way valve (137a) is connected to the third port (137aC) of the pneumatic 3/2-way valve (137a);
- wherein a first port (137bA) of the first pneumatic 2/2-way valve (137b) is connected to the third port (137aC) of the pneumatic 3/2-way(137a), and a second port (137bB) of the first pneumatic 2/2-way valve (137b) is connected to a second air-suspension port (29.2), and wherein in a ground operational state the first and second ports (137bA, 137bB) of the first pneumatic 2/2-way valve (137b) are disconnected and in an actuated operational state the first port (137bA) of the first pneumatic 2/2-way valve (137b) is connected to the second port (137bB) of the first pneumatic 2/2-way valve (137b);
- wherein a first port (137cA) of the second pneumatic 2/2-way valve (137c) is connected to the third port (137aC) of the pneumatic 3/2-way(137a), and a second port (137aB) of the second pneumatic 2/2-way valve (137a) is connected to a third air-suspension port (29.2), and wherein in a ground operational state the first and second ports (137cA, 137cB) of the second pneumatic 2/2-way valve (137c) are disconnected and in an actuated operational state the first port (137cA) of the second pneumatic 2/2-way valve (137c) is connected to the second port (137cB) of the second pneumatic 2/2-way valve (137c); wherein
- the second air-suspension port (29.2) and the third air-suspension port (29.3) are connected via a throttle valve (144) and
- the pneumatic 3/2-way valve (137a), is controlled by a first electrically controlled valve (139a) and the first pneumatic 2/2-way valve (137b) and the second pneumatic 2/2-way valve (137c) are controlled by a second electrically controlled valve (139b).

8. The air processing unit (100) of any of the preceding claims, wherein the housing (101) further comprises one or more additional output ports (2, 21, 22, 23, 23.1 24, 24.1, 26) connected to the main supply line (115) and configured to provide dried compressed (118) to external pneumatic units.

9. The air processing unit (100) of any of the preceding claims, further comprising a multi circuit protection valve arrangement (144) pneumatically arranged between the main supply line (115) and one or more air-suspension ports (29) and/or the additional output ports (2, 21, 22, 23, 24, 26), and wherein the housing (101) further accommodates the multi circuit protection valve arrangement (144).

10. An integrated electronically controlled air-suspension system (1000), comprising:
- a compressed-air supply unit (150, 132) for generating and supplying compressed air (102);
- an air-processing unit (100) in accordance with any of the preceding claims 1 to 9;
- an electronic control unit (140) for providing the electrical control signals (SS, G, S) controlling operation of the electronically controlled valves (139, 139a, 139b, 139c) of the air-suspension-system valve unit (138); and optionally, the electronically controlled exhaust control valve unit (118) and/or the governor control valve (130), and
- air-suspension units (35), in particular air-bellows (35.1, 35.2), pneumatically connected to the air-suspension ports (29, 29.1, 29.2, 29.3).

11. A commercial vehicle (3000) comprising an integrated electronically controlled air-suspension system (1000) in accordance with claim 10.
